(19) **Europäisches Patentamt European Patent Office Office européen des brevets**

(11) **EP 4 465 548 A1**

(12) **EUROPEAN PATENT APPLICATION**
published in accordance with Art. 153(4) EPC

(43) Date of publication:
**20.11.2024 Bulletin 2024/47**

(21) Application number: **23739914.2**

(22) Date of filing: **06.01.2023**

(51) International Patent Classification (IPC):
**H04B 7/06** (2006.01)

(52) Cooperative Patent Classification (CPC):
**H04B 7/06; H04B 7/08**

(86) International application number:
**PCT/CN2023/070959**

(87) International publication number:
**WO 2023/134571 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2022 CN 202210031216**

(71) Applicant: **Sony Group Corporation Tokyo 108-0075 (JP)**

(72) Inventors:
• **ZHANG, Fan Beijing 100084 (CN)**
• **WANG, Zhaocheng Beijing 100084 (CN)**
• **CAO, Jianfei Beijing 100027 (CN)**
• **MA, Ke Beijing 100084 (CN)**

(74) Representative: **D Young & Co LLP 3 Noble Street London EC2V 7BQ (GB)**

(54) **ELECTRONIC DEVICE AND METHOD FOR WIRELESS COMMUNICATION, AND COMPUTER-READABLE STORAGE MEDIUM**

(57) Provided are an electronic device and method for wireless communication, and a computer-readable storage medium. The electronic device may comprise a processing circuit, the processing circuit being configured to: on the basis of a result that candidate beams are previously used to perform beam tracking with respect to another device in communication with the electronic device, estimate a prediction probability that each candidate beam is an optimal beam; and on the basis of the estimated prediction probability, select, from the candidate beams, a measurement beam for beam tracking of next time.

300

Estimation unit **310**

Selection unit **320**

Communication unit **330**

Figure 3

**Description**

This application claims the priority of the Chinese patent application with the application number 202210031216.9 and the title of the invention "ELECTRONIC DEVICE AND METHOD FOR WIRELESS COMMUNICATION, AND COMPUTER-READABLE STORAGE MEDIUM" submitted to the China Patent Office on January 12, 2022, all contents of which are incorporated by reference in this application.

**TECHNICAL FIELD**

The present application relates to the technical field of wireless communication, and more particularly, relates to an electronic device and method for wireless communication and a computer-readable storage medium that facilitate proper determination of a measurement range of beam tracking.

**BACKGROUND**

Beamforming technology is widely used in New Radio (NR) to compensate for high path loss and improve received power. In order to support the beamforming technology, the beam management obtains and maintains the beam set(s) used by the base station side/user equipment side for uplink/downlink. Traditional beam management uses beam scanning, that is, the base station/user equipment side measures all candidate beams, and selects the optimal beam with the best beam quality (such as the maximum Reference Signal Receiving Power (RSRP)) as the beam to be used in data transmission. When the number of candidate beams is large, the overhead of beam scanning is huge.

In order to reduce beam scanning overhead, beam tracking technology has been proposed, which measures beam quality for beams within the measurement range on the basis of the currently used beams (current beams) (rather than measuring all beams), so as to track changes of the (optimal) beam(s). One of the key points of beam tracking technology is to determine the measurement range of beam tracking.

**SUMMARY**

A brief summary of the present disclosure is given below in order to provide a basic understanding of some aspects of the present disclosure. It should be understood, however, that this summary is not an exhaustive summary of the disclosure. It is not intended to identify key or critical parts of the disclosure, nor is it intended to limit the scope of the disclosure. Its purpose is merely to present some concepts of the disclosure in a simplified form as a prelude to the more detailed description that is presented later.

It is an object of at least one aspect of the present disclosure to provide an electronic device and method for wireless communication, and a computer-readable storage medium, which utilize the results of beam tracking previously performed using individual beams to select beams to be used in next beam tracking, so that the measurement range of beam tracking can be properly determined.

According to an aspect of the present disclosure, there is provided an electronic device comprising a processing circuitry configured to: estimate a prediction probability that each candidate beam is an optimal beam based on results of previous beam tracking with respect to another device in communication with the electronic device using the candidate beams; and select, based on the estimated prediction probability, a measurement beam for the next beam tracking among the candidate beams.

According to another aspect of the present disclosure, there is also provided a method for wireless communication, the method comprising: estimating a prediction probability that each candidate beam is an optimal beam based on the results of previous beam tracking using the candidate beams with respect to another device in communication with the electronic device; and selecting, based on the estimated prediction probability, a measurement beam for the next beam tracking among the candidate beams.

According to another aspect of the present disclosure, there is also provided a non-transitory computer-readable storage medium storing executable instructions, the executable instructions, when executed by a processor, cause the processor to perform the above-mentioned method for wireless communication or the individual functions of the aforementioned electronic device.

According to other aspects of the present disclosure, computer program codes and computer program products for implementing the above-mentioned method according to the present disclosure are also provided.

According to at least one aspect of the embodiments of the present disclosure, the prediction probability that each candidate beam is the optimal beam is estimated by using the results of previous beam tracking using the candidate beams, and the measurement beam for the next beam tracking is determined based on such prediction probability, so that the measurement range of beam tracking can be appropriately determined.

Further aspects of embodiments of the present disclosure are given in the following descriptive section, wherein the detailed description serves to fully disclose preferred embodiments of the embodiments of the present disclosure without imposing limitations thereon.

**BRIEF DESCRIPTION OF THE DRAWINGS**

The drawings described herein are for illustrative purposes only of selected embodiments and not all possible implementations, and are not intended to limit the scope of the present disclosure. In the appended drawings:

Figure 1 is a schematic diagram for illustrating changes in beam quality caused by user movement;

Figure 2 is a schematic diagram for illustrating beam switching of different terminal devices in a cell;

3 is a block diagram illustrating a configuration example of an electronic device according to an embodiment of the present disclosure;

Figure 4 is a schematic diagram for illustrating the variation of the beam qualities of different beams with the orientation of the terminal device;

Figure 5 is a schematic diagram for illustrating the variation of the ratio of the beam qualities of different beams with the orientation of the terminal device;

Figure 6 is a block diagram illustrating another configuration example of an electronic device according to an embodiment of the present disclosure;

Figure 7 is a schematic diagram schematically showing an example structure of a long short-term memory (Long Short-Term Memory, LSTM) model;

Figure 8 is a schematic diagram for explaining an example use of a prediction model by an estimation unit of an electronic device according to an embodiment;

Figure 9 is a schematic diagram for illustrating an example of an adjacent beam set defined for a linear antenna array (Uniform Planar Array, ULA);

Figure 10 is a schematic diagram for illustrating an example of an adjacent beam set defined for a rectangular antenna array (Uniform Rectangular Array, UPA);

Figure 11 is a block diagram showing still another configuration example of an electronic device according to an embodiment of the present disclosure;

Figure 12 is a flowchart illustrating an example signaling interaction for a beam tracking process of an electronic device implemented on the network side;

Figure 13 is a flowchart illustrating an example signaling interaction for a beam tracking process of an electronic device implemented on the terminal side;

Figures 14 and 15 are schematic diagrams illustrating example simulation results of a beam tracking process of an electronic device according to an embodiment of the present disclosure;

Figure 16 is a flowchart illustrating a procedure example of a method for wireless communication according to an embodiment of the present disclosure;

Figure 17 is a block diagram showing a first example of a schematic configuration of an eNB to which the techniques of this disclosure can be applied;

Figure 18 is a block diagram illustrating a second example of a schematic configuration of an eNB to which the technology of the present disclosure can be applied;

Figure 19 is a block diagram showing an example of a schematic configuration of a smartphone to which the technology of the present disclosure can be applied;

Figure 20 is a block diagram showing an example of a schematic configuration of a car navigation device to which the technology of the present disclosure can be applied.

While the disclosure is susceptible to various modifications and alternative forms, specific embodiments thereof have been shown by way of example in the drawings and described in detail herein. It should be understood, however, that the description herein of specific embodiments is not intended to limit the present disclosure to the precise forms disclosed, but on the contrary, the present disclosure is intended to cover all matters falling within the spirit and scope of the present disclosure. Modifications, Equivalents and Substitutions. It is noted that corresponding numerals indicate corresponding parts throughout the several views of the drawings.

## DETAILED DESCRIPTION OF EMBODIMENTS

Examples of the present disclosure will now be described more fully with reference to the accompanying drawings. The following description is merely exemplary in nature and is not intended to limit the disclosure, application or uses.
Example embodiments are provided so that this disclosure will be thorough, and will fully convey the scope to those who are skilled in the art. Numerous specific details are set forth such as examples of specific components, devices and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known structures, and well-known technologies are not described in detail.
It will be described in the following order:

1. Overview of the problem

2. Configuration example of electronic device

    2.1 Configuration example

    2.2 Example processing performed by prediction unit

    2.3 Example processing performed by selection unit

    2.4 Examples of electronic device implemented on the transmitting side (network side)

    2.5 Examples of electronic device implemented on the receiving side (terminal side)

    2.6 Simulation results of beam tracking process of electronic device

3. Method embodiment

4. Application examples

<1. Overview of the problem>

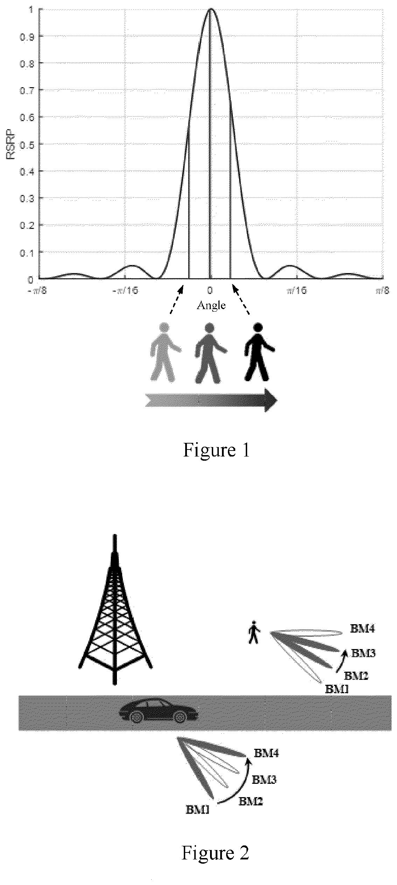

In mobile communication, as the user moves, the position of the user relative to the base station or the angle of the line of sight (LOS) path between the base station and the terminal device (terminal equipment) changes, resulting in the signal quality of the beam used (also in this paper called beam quality) changes. Figure 1 is a schematic diagram for explaining changes in beam quality caused by user movement, which shows changes in signal quality (RSRP) of the currently used beam with an angle of 0 degrees that are caused by changes in the angle of the LOS path between the base station and the terminal device as the user moves. When the user's orientation changes to a certain extent, the currently used beam is no longer the optimal beam, and a re-determined optimal beam needs to be used.
Experiments show that in the direct line-of-sight scenario, the optimal base station beam and terminal device beam tend to change continuously, and in the non-line-of-sight (NLOS) scenario, the optimal base station beam and terminal device beam may involve discrete, hopping changes, where the terminal device beam is less stable than the base station beam. For this reason, continuous beam tracking is required to determine the optimal beam currently in use. An adjacent beam tracking technology has been proposed in the prior art, which periodically performs measurements on beams within a certain range near the currently used optimal beam (also referred to herein as the currently used beam).

There are some problems with the beam tracking described above. Due to the possibility of discrete hopping of the beam in non-line-of-sight scenarios, the current beam tracking scheme using a beam within a fixed measurement range near the currently used beam may fail to track the beam when the measurement range is too small, and cause unnecessary overhead when the measurement range is too large.

In addition, for the base station side, in order to ensure successful beam tracking, the measurement range of its beam tracking is determined for the fastest moving terminal device (such as a vehicle) in the entire cell. As an example, refer to the schematic diagram shown in Figure 2 for illustrating beam switching of different terminal devices in a cell. As shown in Figure 2, for a terminal device with a high moving speed, that is, a vehicle terminal device, its optimal beam is switched from BM1 to BM4, and the switching range is relatively large, so a larger measurement range is required; for the terminal device with a slow moving speed, i.e. the terminal device of a pedestrian, its optimal beam is switched from BM2 to the adjacent BM3, and the beam switching range is small, so only a small measurement range is required. The measurement range of the beam tracking of the base station determined for the entire cell may not be necessary for terminal devices that move slowly, such as those for pedestrians.

In view of the above problems, the inventor proposes to use the results of previous beam tracking to dynamically determine the measurement range of the next beam tracking for another device communicating with the subject electronic device, so that the appropriate measurement range of the beam tracking can be determined.

<2. Configuration example of electronic device>

[2.1 Configuration Example]

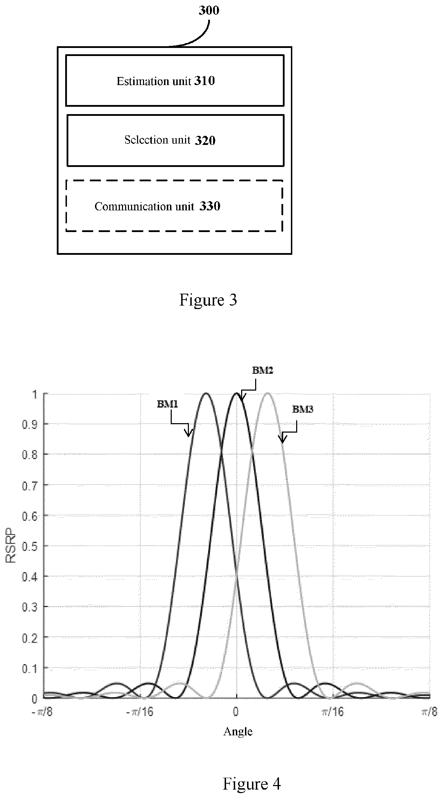

Figure 3 is a block diagram showing a configuration example of an electronic device according to an embodiment of the present disclosure.

As shown in Figure 3, the electronic device 300 may include an estimation unit 310, a selection unit 320 and an optional communication unit 330.

Here, each unit of the electronic device 300 may be included in the processing circuitry. It should be noted that the electronic device 300 may include one processing circuitry, or may include multiple processing circuitries. Further, the processing circuitry may include various discrete functional units to perform various different functions and/or operations. It should be noted that these functional units may be physical entities or logical entities, and units with different titles may be realized by the same physical entity. The electronic device 300 may be a network side device or a terminal device, which is not limited here.

According to an embodiment of the present disclosure, the estimation unit 310 of the electronic device 300 may estimate a prediction probability that each candidate beam is an optimal beam, based on results of previous beam tracking with respect to another device in communication with the electronic device using the candidate beams, for example, via the communication unit 330. The selection unit 320 of the electronic device 300 may select a measurement beam for next beam tracking among candidate beams based on the estimated prediction probability.

As an example, the results of beam tracking used by the estimation unit 310 may include time series data of signal qualities corresponding to candidate beams (also referred to herein as beam quality of candidate beams, such as RSRP) obtained through beam tracking.

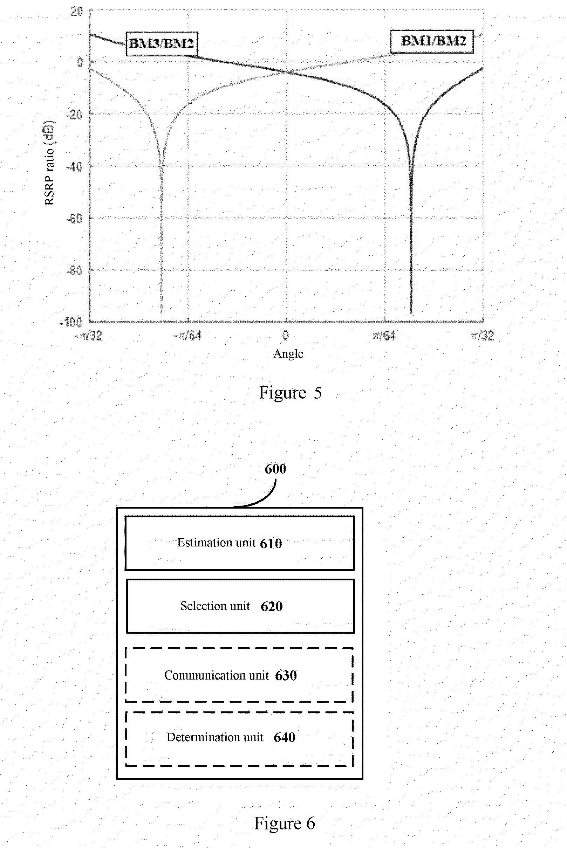

On the one hand, in the communication between the base station and the terminal device, the beam qualities of different beams, such as the ratio between the beam qualities of different beams, can reflect the orientation of the terminal device relative to the base station or the orientation of the LOS path between the base station and the terminal device. As an example, the schematic diagrams shown in Figure 4 and Figure 5 can be referred to for illustrating the beam qualities of different beams and the ratio between the beam qualities of different beams as a function of the orientation of the terminal device, wherein Figure 4 shows in the case of a single LOS path, the RSRPs of different beams BM1 to BM3 vary with the LOS path angle; and Figure 5 shows, in the case of a single LOS path, the ratio of RSRPs of beams BM3 to BM2 and the ratio of RSRPs of beams BM1 to BM2 (in the area where the relevant beams overlap) vary with the LOS path angle. On the other hand, in the communication between the base station and the terminal device, the change of the beam quality of each beam can reflect the change of the orientation of the terminal device relative to the base station, and then reflect the movement characteristics of the terminal device. For example, as shown in Figure 1, for the currently used beam with an angle of 0°, when the orientation of the user or terminal device relative to the base station is close to the beam angle, the RSRP increases; conversely, when the orientation of the terminal device relative to the base station is far away from the beam angle, RSRP decreases.

Therefore, the time series data of the beam quality of each candidate beam can reflect the orientation of the terminal device relative to the base station and the movement of the terminal device, and the movement of the terminal device in a short period of time, such as the speed and direction of the movement, is stable, so the above-mentioned time series data can be used to estimate the prediction probability that each candidate beam is the optimal beam.

The selection unit 320 of the electronic device 300 may select a measurement beam for next beam tracking from among the candidate beams based on the prediction probability estimated by the estimation unit 310. As an example, the selection unit 320 may select the measurement beam by selecting as small a number of candidate beams as possible among the candidate beams and whose total prediction probability satisfies a predetermined condition. The predetermined condition is such as but not limited to that the total prediction probability is greater than a predetermined threshold and the like.

The electronic device 300 according to the embodiment may be applied to the determination of the measurement range of the transmission beam tracking of the transmitting side or the reception beam tracking of the receiving side. In transmission beam tracking at the transmitting side, for each transmission beam (measurement beam) within the measurement range of beam tracking, for example, a reception beam can be used to measure its signal quality (such as RSRP), and based on the obtained signal quality correspond to each of these transmission beams, the beam to be used in the data transmission can be determined. In the transmission beam tracking process, the current reception beam can be used uniformly for each transmission beam, or the reception beam corresponding to the transmission beam in the previous beam pairing process can be used for each transmission beam, or the appropriate reception beam determined by other methods can be used. In reception beam tracking at the receiving side, for each reception beam (measurement beam) within the measurement range of beam tracking, the reception beam can be used to measure the signal quality of the transmission beam, and based on the signal quality (for example RSRP) obtained by using each reception beam, the beam to be used in the data transmission can be determined among these reception beams. During the beam tracking process of the reception beam, preferably, the currently used transmission beam is uniformly used for each reception beam, or an appropriate transmission beam determined in other ways is adopted.

When the electronic device 300 is applied to the transmission beam tracking of the transmitting side, the involved candidate beams and measurement beams refer to the transmission beams, and when the electronic device 300 is applied to the reception beam tracking of the receiving side, the involved candidate beams and measurement beams refer to the reception beams. Without loss of generality, when no special distinction is necessary, the expressions of candidate beams or measurement beams will be uniformly used herein.

Optionally, in an example, the selection unit 320 of the electronic device 300 may also be configured to, before performing beam tracking on the other device communicating with the electronic device for the first time, select the measurement beam for the first beam tracking among the candidate beams, based on a result of beam scanning with respect to the other device using the candidate beams. As an example, the selection unit may select the candidate beam with the best beam quality (for example, corresponding to the highest RSRP) in beam scanning as the measurement beam for the first beam tracking.

In addition, optionally, in an example, the electronic device may also have a beam tracking function. Figure 6 shows a block diagram of another configuration example of an electronic device according to an embodiment of the present disclosure. As shown in Figure 6, in addition to the units 610, 620, and 630 respectively corresponding to the estimation unit 310, the selection unit 320 and the optional communication unit 330 in Figure 3, the electronic device 600 may further include an optional determination unit 640. Note that the units 610, 620, 630 of the electronic device 600 may perform functions similar to those of the corresponding units of the electronic device 300, therefore, only the difference between the electronic devices, that is, the determination unit, will be described here. The determination unit 640 may be configured to obtain the signal quality corresponding to each measurement beam in the next beam tracking, and determine the beam to be used in data transmission among the measurement beams according to the obtained signal quality. As an example, the determination unit 640 may determine the measurement beam with the best signal quality (for example, corresponding to the highest RSRP) in beam tracking as the beam to be used in data transmission.

According to this embodiment, with respect to said another device communicating with the subject electronic device, the results of the previous beam tracking are used to dynamically determine the measurement range of the next beam tracking, so that an appropriate measurement range can be determined. For example, because the measurement range of the next beam tracking is dynamically determined based on the results of the previous beam tracking (such as the time series data of the beam quality of the candidate beam obtained in the previous beam tracking) instead of setting a fixed measurement range (such as a smaller measurement range set to reduce the overhead of beam tracking), it is possible to properly determine the measurement range even in the case of beam hopping caused by user motion. In addition, when the electronic device in this embodiment is implemented on the base station side, since the measurement range of its beam tracking is determined for another device that communicates with it, that is, a single terminal device rather than for the entire cell, unnecessary beam tracking overhead can be avoided for terminal devices with slow moving speeds.

Next, example processing performed by the estimation unit and the selection unit will be further described.

[2.2 Example processing performed by the estimation unit]

Preferably, the estimation unit 310 of the electronic device 300 in the embodiment of the present disclosure may be configured to use a pre-acquired prediction model to determine the prediction probability of a candidate beam, wherein the prediction model is obtained through machine learning using the training data of the result of beam tracking.

As mentioned earlier, in the time series data of the signal quality corresponding to the candidate beam (which may also be referred to as the beam quality of the candidate beam herein) obtained as a result of beam tracking, the ratio between the beam qualities of different beams can reflect the orientation of the terminal device, and the change of the beam quality of each beam can reflect the movement of the terminal device, so such a result of beam tracking can be used to estimate the prediction probability that each candidate beam is the optimal beam. In practical applications, directly using the time series data of beam quality to estimate the prediction probability that the candidate beam is the optimal beam may have limited accuracy, because the ratio between beam qualities such as the RSRP ratio is interfered by multipath and noise, and the change of the beam quality of each beam, such as the change of RSRP, is interfered by large-scale fading changes, multipath and noise, and they cannot accurately reflect the orientation and movement of the terminal device.

In this preferred embodiment, the estimation unit 310 utilizes the prediction model obtained through machine learning using the training data of the results of beam tracking in advance to effectively analyze the ratio between the beam qualities of different beams and the variation of the beam quality of each beam, so as to accurately extract the orientation feature and motion feature of the terminal device. The input of the prediction model can be the signal quality corresponding to the candidate beam obtained by the previous beam tracking, that is, the time series data $[R_1, R_2, ..., R_t]$ of the beam quality, in which each element Ri, $1 \leq i \leq t$ is the beam quality, that is, RSRP, of each candidate beam for the i-th beam tracking, and t is the current (serial) number of beam tracking. The output of the prediction model may be, for example, the prediction probability that each candidate beam will be the optimal beam in the next beam tracking.

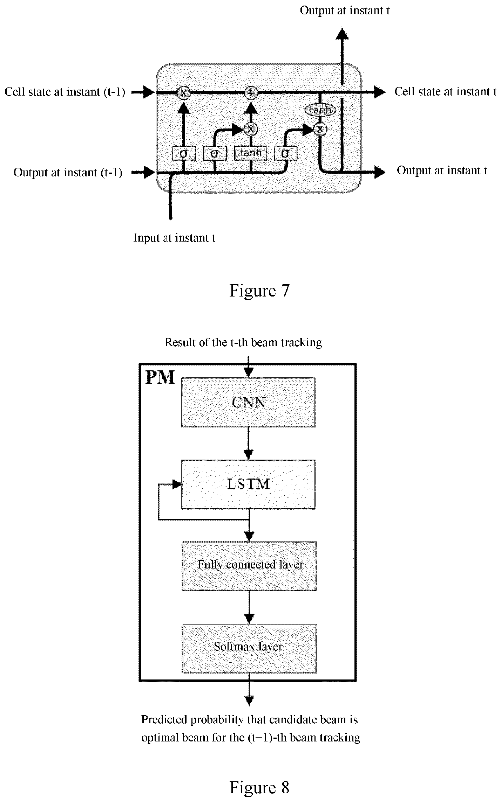

Prediction models may include various suitable models capable of extracting time-series features. For example, the prediction model may include a long short-term memory (LSTM) model. LSTM is a deep learning model for extracting time series features. Figure 7 schematically shows an example structure of the LSTM model. The operators in the shaded box in the figure indicate the point multiplication (the left operator of the first row) and the addition (the right operator of the first row), tangent (tanh), Sigmod function ($\sigma$) and other operations, which will not be repeated here. As shown in Figure 7, the input information of the LSTM model at the current instant (or moment) t includes (1) the cell state and output at the previous instant (t-1); and (2) the input of the LSTM model at the current instant t. Therefore, such a model can extract time series features, and each time the LSTM model is used, it only needs to provide the input at the current instant t from outside the LSTM model, without repeatedly inputting the previous input information from outside the LSTM model.

As an example, Figure 8 schematically shows an example use of a prediction model by an estimation unit of an electronic device in a preferred embodiment. As shown in Figure 8, the prediction model PM includes a CNN, a LTSM, a fully connected layer and a Softmax layer. The input of the model is the result of the t-th beam tracking (also referred to as the beam tracking at the current instant, i.e. the instant t), such as RSRP, and the output is prediction probability that each candidate beam is the optimal beam estimated for the (t+1)-th beam tracking (also referred to as the beam tracking at the next instant, i.e. the instant (t+1)).

The input of the prediction model PM may be the RSRP of each candidate beam in the t-th beam tracking, which may be in the form of a vector whose length is the number of candidate beams, M, and each element in the vector corresponds to a candidate beam. For a measured candidate beam, that is, the measurement beam, in the t-th beam tracking, a corresponding element indexed in the vector is the measured RSRP; for an unmeasured beam in the t-th beam tracking, a corresponding element indexed in the vector is 0.

The CNN in the prediction model PM is used to extract preliminary features from the result of the t-th beam tracking, namely RSRP. On the one hand, the LSTM model in the prediction model PM inputs the preliminary features extracted by CNN from the result of the t-th beam tracking, and on the other hand, it inputs the output and cell state of the LSTM model per se after the last, (t-1)-th beam tracking. The output x of the LSTM model for the t-th beam tracking is provided to the fully connected layer. The fully connected layer uses **y=Wx+b** to convert the output of the LSTM to y, where **y** is the output of the fully connected layer, which is a vector whose length is the number of candidate beams, and **W** and **b** are the linear weight and bias of the fully connected layer, respectively. The Softmax layer converts the output of the fully connected layer into the prediction probability that the candidate beam is the optimal beam. The Softmax layer is expressed as follows:

$$\mathrm{Softmax}(y_k; y_1, ..., y_M) = \frac{e^{y_k}}{\sum_{i=1}^{M} e^{y_i}} \quad ... \text{ (Formula 1)}$$

The output of the prediction model PM is the prediction probability $\{p_1, p_2, ..., p_M\}$ that each candidate beam is the optimal beam for the (t+1)-th beam tracking.

The above prediction model can be obtained through training by using pre-labeled training data in various appropriate ways. For example, cross-entropy can be used as a loss function, and various optimizers can be used to optimize model parameters, which will not be repeated here.

[2.3 Example processing performed by selection unit]

The selection unit 320 of the electronic device 300 in the embodiment of the present disclosure can select the measurement beams through various example processes, so that the total prediction probability of these candidate beams satisfies the predetermined condition and the number of the selected candidate beams is as small as possible. The predetermined condition includes, but is not limited to, that the total prediction probability is greater than a predetermined threshold $\eta$. To ensure successful beam tracking, a relatively large threshold can be set. For example, $\eta=0.99$ can be set. Thresholds such as 0.9 or 0.95 can also be set, and there is no special limitation here.

(First example)

In the first example, the selection unit 320 may select the measurement beams, that is, determine the measurement beam set, by selecting the minimum number of candidate beams whose total prediction probability satisfies a predetermined condition among the candidate beams.

Preferably, the predetermined condition may be that the total prediction probability is greater than a predetermined threshold $\eta$. For example, the prediction probabilities of the M candidate beams obtained by the estimation unit can be ranked from high to low as $p_{i_1}, p_{i_2}, \ldots, p_{i_M}$, that is,

$$\{p_{i_1}, p_{i_2}, \ldots, p_{i_M}\} = \{p_1, p_2, \ldots, p_M\}$$

$$p_{i_1} \geq p_{i_2} \geq \cdots \geq p_{i_M} \quad \text{... (Formula 2)}$$

The selection unit 320 can select, based on the probability threshold $\eta$ and the prediction probability of each candidate beam, N candidate beams satisfying the following condition as the measurement beams for the next beam tracking:

$$\min N$$

$$\text{s.t. } \sum_{n=1}^{N} p_{i_n} \geq \eta \quad \text{... (Formula 3)}$$

Alternatively, the predetermined condition may be that the total prediction probability of the selected candidate beams is as large as possible and the number of candidate beams is as small as possible. For example, when the difference between the total prediction probability $P_{total1}$ of the minimum number N1 of candidate beams and the total prediction probability $P_{total2}$ of the next smallest number N2 of candidate beams is less than a predetermined probability difference threshold, the minimum number N1 of candidate beam are used as the measurement beams for the next beam tracking; otherwise, the next smallest number N2 of candidate beams are selected as the measurement beams for the next beam tracking.

In the first example, selection of measurement beams can be changed in units of individual candidate beams. Since the measurement beams for each beam tracking can be changed at the granularity of a single beam, the measurement range can be changed flexibly, so that the overhead of beam tracking is smaller.

(Second example)

In the second example, the selection unit 320 may select the measurement beam by selecting the smallest candidate beam set whose total prediction probability of the included candidate beams satisfies a predetermined condition among multiple candidate beam sets.

Preferably, the predetermined condition may be that the total prediction probability is greater than a predetermined threshold $\eta$.

As an example, each candidate beam set considered by the selection unit 320 may include one or more adjacent beam sets, and each adjacent beam set is centered on the optimal prediction beam with the highest prediction probability among all candidate beams, and includes candidate beams with a predetermined beam distance from the optimal prediction beam, wherein the Lth candidate beam set includes the adjacent beam set whose beam distance is the minimum value and (L-1) adjacent beam sets whose beam distance increases sequentially from the minimum value , L being a natural number greater than or equal to 1.

For example, the adjacent layer number (the serial number or index of the adjacent beam set) l, where l=0, 1, 2, 3, ... , and the corresponding adjacent beam set $B_l$ can be defined, where in a given adjacent beam set, all candidate beams are in a same beam distance from the optimal prediction beam, and the above-mentioned beam distance of the adjacent beam set with a low layer number (or a small serial number) is smaller than the above-mentioned beam distance of the adjacent beam set with a high layer number (or a large serial number). Starting from the 0th adjacent layer, adjacent beam sets with increasing beam distances from the optimal prediction beam are defined. The first candidate beam set

$$\mathfrak{B}_1 = \{\mathbf{B}_0\}$$ includes the adjacent beam set with the smallest beam distance from the optimal prediction beam, the second candidate beam set $$\mathfrak{B}_2 = \{\mathbf{B}_0, \mathbf{B}_1\}$$ includes the adjacent beam set whose beam distance from the optimal prediction beam is the minimum value and (2-1)=1 adjacent beam set whose beam distance increases from the minimum value, the third candidate beam set $$\mathfrak{B}_3 = \{\mathbf{B}_0, \mathbf{B}_1, \mathbf{B}_2\}$$ includes the adjacent beam set whose beam distance from the optimal prediction beam is the minimum value and (3-1)=2 adjacent beam sets whose beam distances sequentially increase from the minimum value, the Lth candidate beam set

$$\mathfrak{B}_L = \{\mathbf{B}_0, \mathbf{B}_1, \mathbf{B}_2, \dots, \mathbf{B}_{L-1}\}$$ includes the adjacent beam set whose beam distance from the optimal prediction beam is the minimum value and (L-1) adjacent beam sets whose beam distances increase sequentially from the minimum value, where L=1, 2, 3, ...

For example, the selection unit 320 may select, based on the probability threshold $\eta$ and the prediction probability $p_i$ of the ith candidate beam in the adjacent beam set $\mathbf{B}_l$ included in each candidate beam set $\mathfrak{B}_L$, the Lth candidate beam set that satisfies the following condition as the measurement beams for the next beam tracking:

$$\min L$$

$$\text{s.t. } \sum_{l=1}^{L} \sum_{i \in \mathbf{B}_l} p_i \geq \eta \qquad \dots \text{(Formula 4)}$$

Alternatively, the predetermined condition may be that the total prediction probability of the selected candidate beam set is as large as possible and the candidate beam set is as small as possible. For example, when the difference between the total prediction probability $P_{total1}$ of the smallest L1-th candidate beam set and the total prediction probability $P_{total2}$ of the next smallest L2-th candidate beam set is less than a predetermined probability difference threshold, the L1-th candidate beam set is selected to be used as the measurement beam for the next beam tracking; otherwise, the L2-th candidate beam set is selected as the measurement beam for the next beam tracking.

In each adjacent beam set, the optimal prediction beam can be, for example, the beam with the largest prediction probability estimated by the estimation unit, and the beam distance between the candidate beam and the optimal prediction beam can be determined based on the direction of the candidate beam and the direction of the optimal prediction beam.

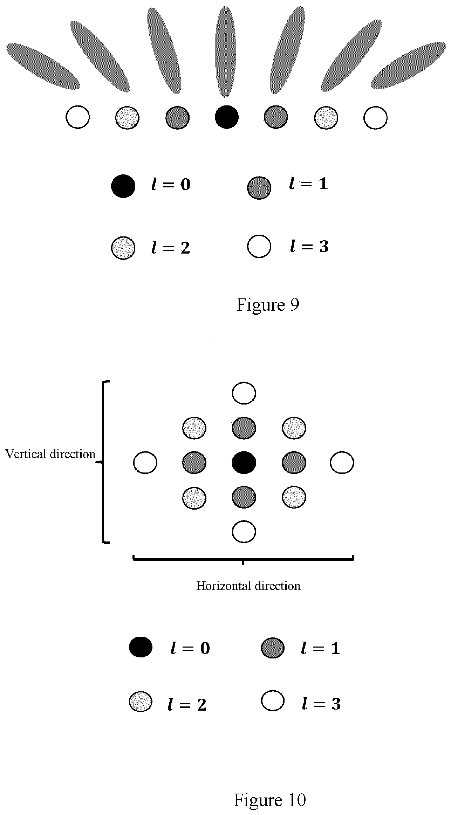

For example, for a linear antenna array (ULA), the M candidate beams are sorted as 1, 2, ..., M in order of direction, then the beam distance between the beam with index i and the beam with index j is defined as |i-j|, |·| represents an absolute value, where i and j are natural numbers between 1 and M respectively. Figure 9 is a schematic diagram illustrating an example of an adjacent beam set defined for a linear antenna array (ULA). As shown in Figure 9, the candidate beam at the center in the figure is the optimal prediction beam, and a total of 4 adjacent layers of l=0, 1, 2, 3 are defined according to the beam distance from the beam.

For a rectangular antenna array (UPA), each candidate beam is sorted as 1, 2, ..., $M_h$ in the horizontal direction, and 1, 2, ..., $M_v$ in the vertical direction, then a beam distance between a beam with the horizontal direction index $i_h$ and the vertical direction index $i_v$ and a beam with the horizontal direction index $j_h$ and the vertical direction index $j_v$ is defined as

$$\sqrt[2]{(i_h - j_h)^2 + (i_v - j_v)^2}$$, wherein, $i_h$ and $j_h$ are natural numbers between 1 and $M_h$, and $i_v$ and $j_v$ are natural numbers between 1 and $M_v$. Figure 10 is a schematic diagram for explaining an example of an adjacent beam set defined for a rectangular antenna array (UPA). As shown in Figure 10, the candidate beam at the center in the figure is the optimal prediction beam, and a total of 4 adjacent layers of l=0, 1, 2, 3 are defined according to the beam distances from that beam.

In the second example, selection of measurement beams may be changed in units of candidate beam sets. Since the candidate beam set may include more than one beam, if the next beam tracking can use the measurement beam, that is, the candidate beam set, of the previous beam tracking, there is no need to change the measurement range of the beam tracking. Thus, signaling overhead associated with changes of the measurement range for beam tracking can be reduced.

The electronic device according to the embodiment and example processing of its constituent units are described above. Next, further example configurations or example processes thereof will be described for the case where the electronic device of the embodiment is implemented on the transmitting side and the case where it is implemented on the receiving side. In the following examples, the downlink scenario is used as an example for description. Due to beam symmetry or beam consistency, after beam tracking is performed on the transmitting side (base station side) and the receiving side (terminal side) to obtain the optimal beam for the downlink scenario, the optimal beam for the uplink scenario can be correspondingly obtained. In addition, based on the present disclosure, those skilled in the art can apply the examples and processes for downlink scenarios given in the embodiments to uplink scenarios appropriately (for example, after appropriate deformation), so details are not repeated here.

[2.4 Examples of electronic devices implemented on the transmitting side]

In this example, an electronic device such as that previously described with reference to Figure 3 or Figure 6 is implemented on the transmitting side. At this time, for example, the candidate beam may be a transmission beam of a downlink reference signal (such as a channel state information reference signal (Channel State Information Reference Signal, CSI-RS)), and the electronic device may be a network side device, such as a base station or a TRP, etc.. Another device communicating with the electronic device may be a terminal device. Optionally, the terminal device may also have the functions of the electronic device described above with reference to Figure 3 or Figure 6.

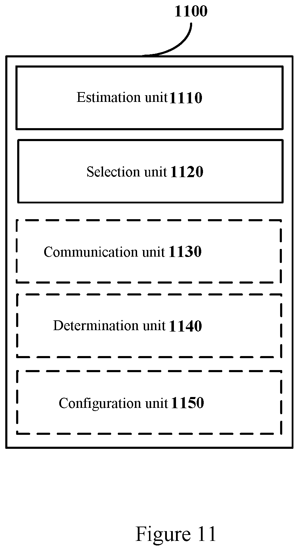

In a preferred embodiment, the electronic device on the network side can configure a flexible downlink reference signal set for the terminal device. Figure 11 is a block diagram showing still another configuration example of an electronic device according to an embodiment of the present disclosure. As shown in Figure 11, in addition to the units 1110, 1120, 1130, and 1140 corresponding to the estimation unit 610, the selection unit 620, the optional communication unit 630, and the optional determination unit 640 in Figure 6, the electronic device 1100 can also include an optional configuration unit 1150. The configuration unit 1150 of the electronic device 1100 may be configured to pre-generate configuration information of a resource set of downlink reference signals, and each downlink reference signal in the resource set can be sent separately (this resource set may therefore be called a flexible resource set), and the electronic device 1100 may provide the configuration information to the terminal device via the communication unit 1130. Optionally, for each downlink reference signal in the resource set, there is a corresponding transmission beam, and the transmission beams of all the downlink reference signals in the resource set cover all possible transmission beams of the electronic device.

As an example, the flexible resource set configured by the configuration unit 1150 may be a flexible CSI-RS resource set. The number of CSI-RS resources included in the traditional CSI-RS resource set is constant. Therefore, in a case where the traditional CSI-RS resource set is used to perform transmission beam tracking, for example, when the number of measurement beams in the transmission beam tracking changes, it may be necessary to configure a new CSI-RS resource set. However, NR stipulates that the upper limit of the number of CSI-RS resource sets for a user is 16, and the beam tracking in which the number of measurement beams changes dynamically in the embodiment may occupy a large number of CSI-RS resource sets. To this end, the electronic device according to this preferred embodiment can use the configuration unit to provide a flexible CSI-RS resource set, so that the single CSI-RS resource set can be used to support the scene where the number of measurement beams for beam tracking changes dynamically.

For example, in the case of using the configured flexible resource set, when the electronic device 1100 selects, via the selection unit 1120, a different downlink reference signal or a different number of downlink reference signals for the next beam tracking than that for the previous beam tracking, it may send an indication about the selected downlink reference signal or the number of the selected downlink reference signal(s) for the next beam tracking to the terminal device via the communication unit 1130. In this way, the electronic device 1100 does not have to configure a new CSI-RS resource set when the measurement beams or the number of measurement beams in the beam tracking changes, but only needs to activate or trigger the selected CSI-RS(s) in the flexible CSI-RS resource set to send the CSI-RS(s).

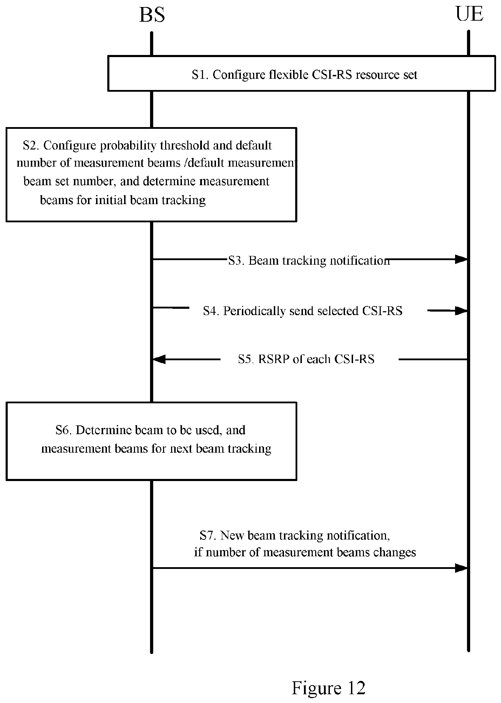

Next, an example signaling process for the electronic device 1100 on the network side to perform beam tracking will be described with reference to specific examples. Figure 12 is a flowchart for illustrating an example signaling interaction implementing a beam tracking procedure of an electronic device at the network side. In the example of Figure 12, the electronic device 1100 is implemented as a base station BS, and another device communicating with it is a terminal device UE, and the electronic device can use the exemplary manner of selecting the measurement beam as in the first example (measurement beam selection in units of a single beam) or the second example (measurement beam selection in units of candidate beam sets) described in "2.3 Example processing performed by selection unit" to determine the measurement beams, that is, determining a set of measurement beams, and it can use the determined set of measurement beams for beam tracking.

As shown in Figure 12, optionally, in step S1, the BS configures a flexible downlink reference signal resource set, such as a flexible CSI-RS resource set, in which each CSI-RS can be sent separately and has a corresponding transmission beams, and transmission beams of all CSI-RSs in the resource set cover all possible transmission beams of the BS. Due to the correspondence between CSI-RSs and transmission beams in the context of the present disclosure, in the following, sometimes the selected CSI-RS just refers to the selected transmission beam, or the selected transmission beam refers to the selected CSI-RS.

In step S2, optionally, the BS configures the probability threshold $\eta_{TRP}$ and the default number of measurement beams $N_{TRP}$/the default measurement beam set (serial) number $L_{TRP,de}$, and determines the measurement beam set for initial beam tracking.

In the case that subsequent measurement beam selection is to be performed in units of a single candidate beam, the BS configures $\eta_{TRP}$ and $N_{TRP}$, so that, for example, the $N_{TRP}$ candidate beams with the best beam qualities (for example, corresponding to the $N_{TRP}$ highest RSRPs) in the transmission beam scanning at the base station can be determined. $N_{TRP}$ candidate beams (for example, corresponding to $N_{TRP}$ CSI-RSs) are used as a set of measurement beams for initial beam tracking.

In the case that subsequent measurement beam selection is to be performed in units of candidate beam sets, the BS configures $\eta_{TRP}$ and $L_{TRP,de}$, so that it can determine, for example, the $L_{TRP,de}$-th candidate beam set that is centered on the transmission beam with the best beam quality (for example, the highest RSRP) in the transmission beam scanning at the base station (that is, the $L_{TRP,de}$-th candidate beam set constructed by using that transmission beam as the optimal prediction beam) as the measurement beams for initial beam tracking, and accordingly determine, for example, the corresponding candidate CSI-RS set with a serial number of $L_{TRP,de}$ as the measurement CSI-RS set.

In step S3, the BS may send a (base station) beam tracking notification to the UE to provide an indication about the selected measurement beam, i.e. the selected CSI-RS, for the beam tracking.

In step S4, the BS periodically sends the selected CSI-RSs to the UE, so that the UE uses the reception beam to sequentially measure RSRP for each CSI-RS used as the measurement beam.

In step S5, the UE feeds back the RSRP of each CSI-RS used as the measurement beam to the BS as the measurement result of this beam tracking.

In step S6, the BS may determine, based on the obtained measurement result of beam tracking, the beam to be used and the measurement beam for the next beam tracking. Here, when the BS configures the probability threshold and the default number of measurement beams in step S2, the measurement beam selection is performed in units of a single candidate beam in step S6; when the BS configures the probability threshold and the default measurement beam set (serial) number in step S2, the measurement beam selection is performed in units of the candidate beam sets in step S6. The specific selection method is as described above, and not repeated here.

The above steps S4 to S6 may be performed periodically until the number of measurement beams determined by the BS in step S6 changes.

When the number of measurement beams determined by the BS in step S6 changes, in step S7 the BS sends a new beam tracking notification to the UE to provide an indication of the selected measurement beams, i.e. the selected CSI-RSs, for beam tracking. Optionally, when the number of measurement beams determined in step S6 remains unchanged but the beams change, the BS may also send a new base station beam tracking notification to the UE in step S7, so as to provide information about the selected measurement beams, i.e. the selected CSI-RSs, for beam tracking. Thereafter, processing similar to the processing from step S4 can be continued, and it will not be repeated here.

Here, when the UE side uses the current reception beam to measure the signal quality of each candidate transmission beam, the indication about the CSI-RS selected for beam tracking sent in steps S3 and S7 can be used to indicate the number of selected CSI-RSs (and the indication in step S7 may be sent only when the number of measurement beams changes), so that the UE side can know the number of measurements on signal quality it needs to perform. When the UE side uses the previously obtained reception beam corresponding to each transmission beam to measure the signal qualities of the candidate transmission beams, the indication about the selected CSI-RS for beam tracking sent in steps S3 and S7 can be used to indicate each of the selected CSI-RSs (and the indication in step S7 can be sent when the measurement beams change), so that the UE side can also know which reception beam it needs to use to perform the measurement.

[2.5 Example of electronic device implemented on the receiving side]

In this example, an electronic device such as that previously described with reference to Figure 3 or Figure 6 is implemented on the receiving side. In this case, for example, the candidate beam may be a reception beam for a downlink reference signal (such as CSI-RS), and the electronic device may be a terminal device. Another device communicating with the electronic device may be a network side device, such as a base station or a TRP. Optionally, the network side device may also have the function of the electronic device described above with reference to Figure 3, Figure 6, or Figure 11.

In a preferred embodiment, the electronic device at the terminal side can pre-acquire configuration information of a resource set of downlink reference signals from the network side device via its communication unit, and each downlink reference signal in the resource set can be sent separately. This resource set can therefore be referred to as a flexible resource set. Optionally, for each downlink reference signal in the resource set, there is a corresponding transmission beam, and the transmission beams of all the downlink reference signals in the resource set cover all possible transmission beams of the network side device.

As an example, such a flexible resource set may be a flexible CSI-RS resource set. The number of CSI-RS resources included in the traditional CSI-RS resource set is constant. Therefore, in a case where the traditional CSI-RS resource set is used for reception beam tracking, for example, when the number of measurement beams in the reception beam tracking changes, the network side device needs to send transmission beams of a number corresponding to the number of the measurement beams, or a transmission beam for a number of times corresponding to the number of the measurement beams, so that a new CSI-RS resource set needs to be configured. The electronic device according to this embodiment can use the flexible CSI-RS resource set configured by the network side, so that the single CSI-RS resource set can be used to support a scenario where the number of measurement beams for reception beam tracking changes dynamically.

For example, in the case where the configured flexible resource set is used, when the electronic device as the terminal device selects, for example, via the selection unit, a different number of reception beams for the next beam tracking than that for the previous beam tracking, it can send, via the communication unit, a request for the downlink reference signal for the next beam tracking to the network side device. In this way, when the number of measurement beams for reception beam tracking changes, the network side device does not need to configure a new CSI-RS resource set, but only needs to activate or trigger the CSI-RS resources, of the required number or for the required times, in the flexible CSI-RS resource set so as to send the same.

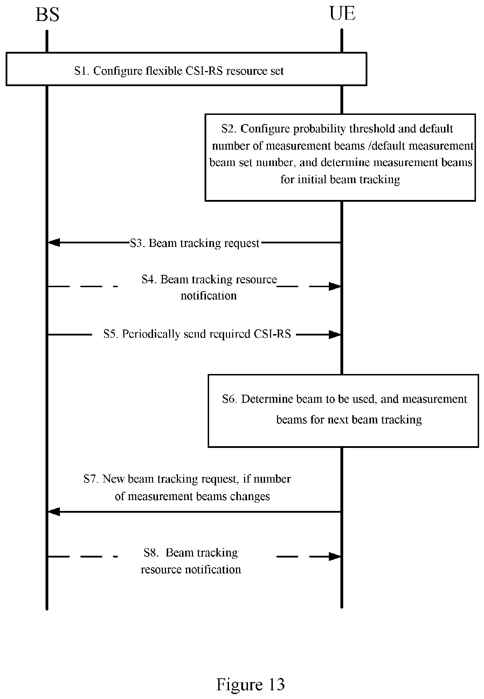

Next, an example signaling process for the electronic device at the terminal side to select a measurement beam for reception beam tracking will be described in conjunction with a specific example. Figure 13 is a flow chart for illustrating an exemplary signaling interaction for a beam tracking process of an electronic device implemented at a terminal side. In the example of Figure 13, the electronic device is realized as a terminal device UE, and another device communicating with it is a base station BS, and the electronic device can use the exemplary manner of selecting the measurement beam as in the first example (measurement beam selection in units of a single beam) or the second example (measurement beam selection in units of candidate beam sets) described in "2.3 Example processing performed by selection unit" to determine the measurement beams, that is, determining a set of measurement beams, and it can use the determined set of measurement beams for beam tracking.

As shown in Figure 13, optionally, in step S1, the BS configures a flexible downlink reference signal resource set, such as a flexible CSI-RS resource set, in which each CSI-RS can be sent separately and has a corresponding transmission beam, and the transmission beams of all CSI-RSs in the resource set cover all possible transmission beams of the BS.

In step S2, optionally, the UE configures the probability threshold $\eta_{UE}$ and the default number of measurement beams $N_{UE}$ /the default measurement beam sets (serial) number $L_{UE,de}$, and determines the measurement beams for initial beam tracking.

In the case that subsequent measurement beam selection is to be performed in units of a single candidate beam, the UE configures $\eta_{UE}$ and $N_{UE}$, so that it can determine, for example, the $N_{UE}$ candidate beams with the best beam qualities(with the highest RSRPs) in the reception beam scanning on the terminal side as the measurement beams for initial beam tracking.

In the case that subsequent measurement beam selection is to be performed in units of candidate beam sets, the UE configures $\eta_{UE}$ and $L_{UE,de}$, so that it can determine, for example, the $L_{UE,de}$-th candidate beam set that is centered on the reception beam with the best beam quality (for example, the highest RSRP) in the reception beam scanning at the terminal device (that is, the $L_{UE,de}$-th candidate beam set constructed by using that reception beam as the optimal prediction beam) as the measurement beams for initial beam tracking.

In step S3, the UE may send a (terminal) beam tracking request to the BS to indicate to the base station the request for CSI-RS by the beam tracking. The request sent by the UE may include the number of measurement beams for the reception beam tracking or related information that can be used to determine the number (such as but not limited to the number of measurement beams $N_{UE}$/measurement beam set number $L_{UE,de}$ which has been set, and the corresponding relationship between the measurement beam set number and the number of measurement beams, etc.), so that the base station side can know the number of times for which it needs to send CSI-RSs or the number of CSI-RSs that it needs to send. Correspondingly, the BS may send CSI-RSs, of the number corresponding to the number of measurement beams for the reception beam tracking, or for the times corresponding to the number of measurement beams for the reception beam tracking, so that the UE may sequentially use each reception beam that is a measurement beam to measure the CSI-RS sent by the BS.

In optional step S4, the BS may send a terminal beam tracking resource notification to the UE, indicating the CSI-RS resources to be used for beam tracking.

In step S5, the BS periodically sends the required CSI-RS to the UE, so that the UE uses each reception beam that is a measurement beam to sequentially measure the RSRP of the CSI-RS, as the measurement result of this beam tracking.

In step S6, the UE may determine, based on the obtained measurement results of beam tracking, the beam to be used and the measurement beam set for the next beam tracking. Here, in the case that the UE configures the probability threshold and the default number of measurement beams in step S2, the measurement beam selection is performed in the unit of a single candidate beam in step S6; in the case that the UE configures the probability threshold and the default measurement beam set (serial) number in step S2, the measurement beam selection is performed in units of the candidate beam sets in step S6. The specific selection method is as described above, and not be repeated here.

The above steps S5 to S6 may be performed periodically until the number of beams in the measurement beam set determined by the UE in step S6 changes.

When the number of beams in the measurement beam set determined by the UE in step S6 changes, in step S7, the UE sends a new terminal beam request notification to the BS to indicate to the base station the request for the CSI-RS by the beam tracking. This request may be similar to the request in step S3.

In optional step S8, the BS sends a new user beam tracking resource notification to the UE, indicating the CSI-RS resource to be used for beam tracking. Thereafter, processing similar to the processing from step S5 can be continued, and will not be repeated here.

In another preferred embodiment of this example, an electronic device 600 such as that previously described with reference to Figure 6 is implemented on the receiving side. In this case, the determination unit 640 of the electronic device can obtain, for example, the signal quality corresponding to each measurement beam in the next beam tracking through various existing measurement methods, and determine, according to the obtained signal qualities, the beam to used in data transmission (i.e. the used or adopted beam) among the measurement beams. In addition, the determination unit can be further configured to measure the Block Error Ratio (BLER) of the adopted beam, and when the BLER of the adopted beam is greater than the set threshold (which threshold can be pre-set for example based on tests or be properly set according to system requirements), cause a beam tracking recovery request to be sent to the base station.

Optionally, in this embodiment, the electronic device may also use the selection unit or the determination unit to determine a backup beam, so as to use the determined backup beam to perform uplink random access. As an example, the electronic device may determine a backup beam based on the measurement beams (that is, the measurement beam set) selected by the selection unit for beam tracking. For example, other measurement beams in the measurement beam set except the adopted beam may be used as the backup beam.

As an example, when the selection unit of the electronic device has selected a minimum number of measurement beams whose total prediction probability is higher than a predetermined threshold in units of individual beams for beam tracking as the measurement beams for beam tracking, that is, a set of measurement beams, the electronic device may determine, for example, via the determination unit, the measurement beam with the highest prediction probability except the beam that has been determined to be used in the set of measurement beams as the backup beam. Similarly, when the selection unit of the electronic device has selected the smallest candidate beam set whose total prediction probability is higher than a predetermined threshold in units of candidate beam sets for beam tracking as the measurement beams for beam tracking (that is, the measurement beam set), the electronic device may determine, for example, via the determination unit, the measurement beam with the highest prediction probability except the beam that has been determined to be used in the measurement beam set as the backup beam. Alternatively, the electronic device may also determine the backup beam based on additional beam measurements. If the uplink random access using the determined backup beam fails, the electronic device serving as the terminal performs the link restoration with the base station.

[2.6 Simulation Results]

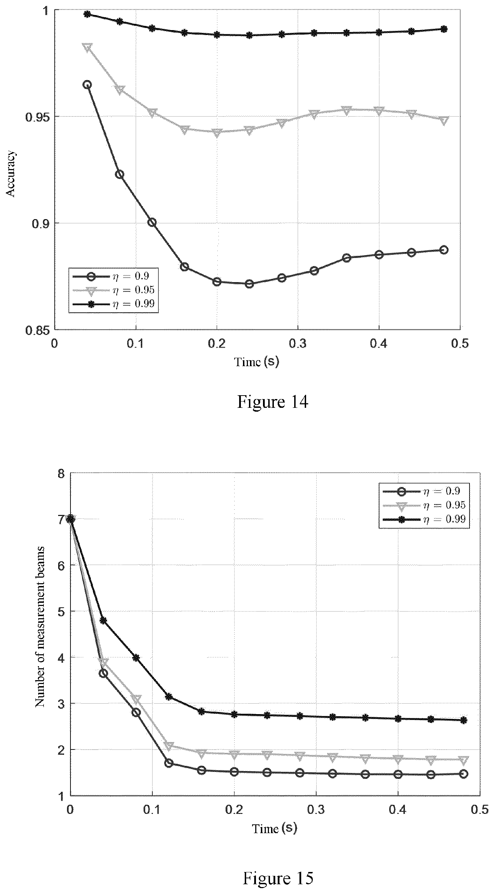

Next, the simulation results of beam tracking performed by the electronic device according to the embodiment of the present disclosure will be described in conjunction with Figure 14 and Figure 15. Figure 14 and Figure 15 are schematic illustration for explaining example simulation results of the beam tracking process of the electronic device according to the embodiment of the present disclosure, showing the accuracy of the beam tracking process and the number of measurement beams, respectively.

In the simulation example, for example, the electronic device 600 shown in Figure 6 is implemented on the network side, for example at the base station, to perform the beam tracking of the base station transmission beam with respect to the specified terminal device. It uses, for example, the prediction model described above with reference to Figure 8 to perform selection of the measurement beam set for beam tracking in units of the candidate beam sets, and determines, by the beam tracking, the adopted beam in the measurement beam set. The simulation scenario is the LOS environment, the radius of the cell is 100 m, the terminal device is only equipped with a single antenna, and the maximum movement speed of the terminal device is 30m/s, and its movement direction is randomly generated in $[0, 2\pi]$, and the existing COST 2100 wireless channel model is used to generate channel data.

The simulation parameters are shown in Table 1.

Table 1: Simulation parameters

| Center frequency | 28 GHz |
| --- | --- |
| The number of antennas of the electronic device at the base station | 64 (ULA) |

(continued)

| The number of beams of the electronic device at the base station | 64 |
|---|---|
| Bandwidth | 200 MHz |
| Beam tracking period | 40 ms |
| Total beam tracking time | 500 ms |

In the simulation example, the accuracy and the (average) number of measurement beams of beam tracking are used as evaluation indicators of the beam tracking process. Assuming that the number of all samples used for evaluation is Ni, the number of samples for which the adopted beam obtained by beam tracking is the optimal beam is $N_2$, and the accuracy is expressed as

$$\text{Accuracy} = \frac{N_2}{N_1} \quad \text{... (Formula 5)}$$

The accuracy of beam tracking under different probability thresholds $\eta$ is shown in Figure 14. It can be seen that under the different thresholds $\eta$ used in all simulations, the accuracy is more than 85%. When $\eta$=0.99, the accuracy reaches 99%, and almost perfect beam alignment is achieved. At the beginning of beam tracking, the accuracy decreases with time, because beam tracking only measures a part of beams, which may lead to tracking failure. However, the accuracy increases after 0.2s, because the prediction model has extracted user motion features more accurately from RSRPs of beam tracking over a period of time.

The (average) number of measurement beams for beam tracking under different probability thresholds $\eta$ is shown in Figure 15, where the initial number of measurement beams is set to 7. It can be seen that as time increases, the number of measurement beams gradually decreases, because the prediction model has extracted user motion features more accurately from RSRPs of beam tracking over a period of time. After 0.2s, the electronic device of the embodiment of the present disclosure only needs to measure less than three beams on average.

<3. Method embodiment>

Corresponding to the above device embodiments, the present disclosure provides the following method embodiments.

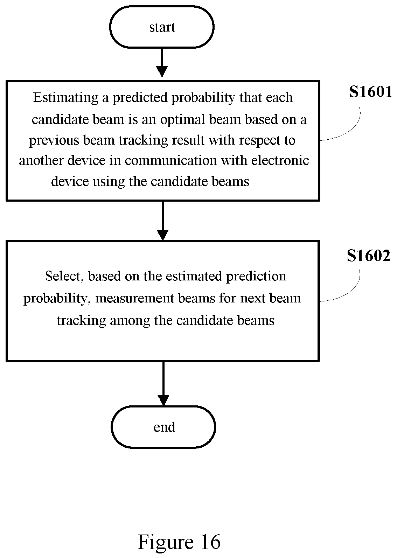

Figure 16 is a flowchart illustrating a procedure example of a method for wireless communication according to an embodiment of the present disclosure.

As shown in Figure 16, in step S1601, based on the results of previous beam tracking using the candidate beams with respect to another device communicating with an electronic device, the prediction probability that each candidate beam is the optimal beam is estimated.

Next, in step S1602, based on the estimated prediction probability, the measurement beam for the next beam tracking is selected among the candidate beams.

Optionally, the results of beam tracking used in step S1601 include time series data of signal qualities corresponding to candidate beams obtained through beam tracking. For example, optionally, in step S1601, a pre-acquired prediction model may be used to determine the prediction probability of a candidate beam, and the prediction model is obtained through machine learning using training data of results of beam tracking.

Optionally, in step S1602, the measurement beam may be selected by selecting a minimum number of candidate beams whose total prediction probability satisfies a predetermined condition among candidate beams. Alternatively, the measurement beam may also be selected by selecting the smallest candidate beam set whose total prediction probability of the included candidate beams satisfies a predetermined condition among multiple candidate beam sets. As an example, the predetermined condition may include that the total prediction probability is greater than a predetermined threshold.

When selecting the measurement beam based on the candidate beam set, each candidate beam set may include one or more adjacent beam sets, and each adjacent beam set is centered on the optimal prediction beam with the highest prediction probability among all candidate beams, and includes candidate beams with a predetermined beam distance from the optimal prediction beam, wherein the Lth candidate beam set includes the adjacent beam set whose beam distance is the minimum value and (L-1) adjacent beam sets whose beam distances increase sequentially from the minimum value , L being a natural number greater than or equal to 1. As an example, the distance between the candidate beam and the optimal prediction beam may be determined according to the difference between the direction of the candidate beam and the direction of the optimal prediction beam.

Although not shown in the figure, the method may further include: obtaining the signal quality corresponding to each measurement beam in the next beam tracking, and determining the beam to be used in the data transmission among the measurement beams according to the obtained signal quality.

In addition, although not shown in the figure, the method may further include: before performing beam tracking on the other device for the first time, selecting measurement beam for first beam tracking among the candidate beams, based on the result of beam scanning using the candidate beams with respect to the other device.

In an embodiment, the method for wireless communication as shown in Figure 16 may be applied to the transmitting side in a downlink scenario, that is, the network side.

In this case, the candidate beam may be a transmission beam of the downlink reference signal, and the electronic device may be a network side device.

At this time, although not shown in the figure, the method in this embodiment may further include: providing the other device with configuration information of a resource set of downlink reference signals in advance, and each downlink reference signal in the resource set can be sent separately. Optionally, the method may further include: when selecting a different number of downlink reference signals for the next beam tracking than for the previous beam tracking, sending indication about the number of downlink reference signals selected for the next beam tracking to the other device. Alternatively, the method may further include: when selecting a different downlink reference signal for the next beam tracking than that for the previous beam tracking, sending an indication about the downlink reference signal selected for the next beam tracking to the other device.

In another embodiment, the method for wireless communication as shown in Figure 16 may be applied to the receiving side in a downlink scenario, that is, the terminal side.

In this case, the candidate beam may be a reception beam for the downlink reference signal, and the electronic device may be a terminal device.

At this time, although not shown in the figure, the method in this embodiment may further include: obtaining configuration information of a resource set of downlink reference signals in advance from the network side device, and each downlink reference signal in the resource set can be sent separately. Optionally, the method may further include: when selecting a different number of reception beams for the next beam tracking than that for the previous beam tracking, sending a request for the downlink reference signal for the next beam tracking to the network side device. Optionally, the method may further include: receiving, from the network side device, an indication about the downlink reference signal to be used for next beam tracking sent in response to the request.

According to the embodiment of the present disclosure, the subject performing the above method may be the electronic device 300, 600 or 1100 according to the embodiment of the present disclosure, so all the above embodiments for the electronic device 300, 600, or 1100 are applicable here.

<4. Application example>

The techniques of this disclosure can be applied to a variety of products.

For example, when an electronic device is implemented on the network side, the electronic device can be implemented as any type of base station equipment, such as macro eNB and small eNB, and can also be implemented as any type of gNB (base station in the 5G system). A small eNB may be an eNB that covers a cell smaller than a macro cell, such as a pico eNB, micro eNB, and home (femto) eNB. Alternatively, the base station may be implemented as any other type of base station, such as NodeB and Base Transceiver Station (BTS). A base station may include: a main body (also referred to as a base station device) configured to control wireless communications; and one or more remote radio heads (RRHs) disposed at places different from the main body.

In addition, the electronic device on the network side can also be implemented as any type of TRP. The TRP may have transmitting and receiving functions, for example, it may receive information from user equipment and base station equipment, and may also send information to user equipment and base station equipment. In a typical example, the TRP can provide services for user equipment and be controlled by the base station equipment. Furthermore, the TRP may have a structure similar to that of the base station equipment, or may only have a structure related to sending and receiving information in the base station equipment.

When an electronic device is implemented in a terminal device, the electronic device can be various user equipment, which can be implemented as a mobile terminal (such as a smart phone, a tablet personal computer (PC), a notebook PC, a portable game terminal, a portable/dongle type mobile routers and digital cameras) or vehicle-mounted terminals (such as car navigation equipment). The user equipment may also be implemented as a terminal performing machine-to-machine (M2M) communication (also referred to as a machine type communication (MTC) terminal). In addition, the user equipment may be a wireless communication module (such as an integrated circuit module including a single chip) mounted on each of the above-mentioned user equipment.

[Application example about base station]

(First application example)

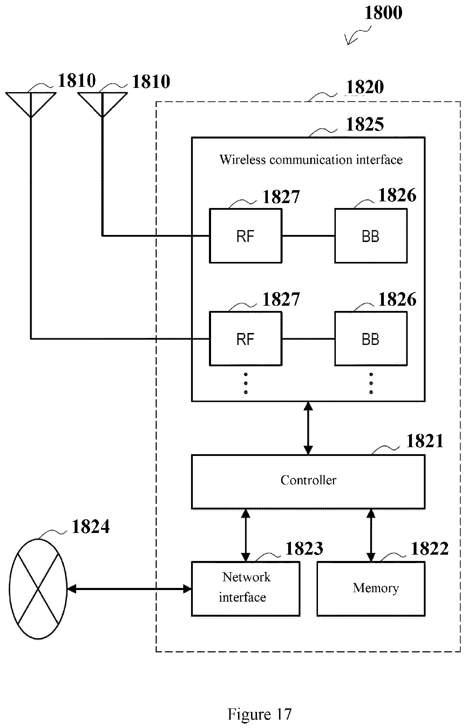

Figure 17 is a block diagram showing a first example of a schematic configuration of an eNB in which the technique of the disclosure can be applied. The eNB 1800 includes a single or multiple antennas 1810 and a base station equipment 1820. The base station equipment 1820 and each antenna 1810 may be connected with each other via RF cable.

Each of the antennas 1810 includes one or more antenna elements (such as multiple antenna elements included in a multiple-input multiple-output (MIMO) antenna), and are used for transmitting and receiving a wireless signal by the base station equipment 1820. The eNB 1800 may include the multiple antennas 1810, as illustrated in Figure 17. For example, the multiple antennas 1810 may be compatible with multiple frequency bands used by the eNB 1800. Although Figure 17 illustrates an example in which the eNB 1800 includes multiple antennas 1810, the eNB 1800 may also include a single antenna 1810.

The base station equipment 1820 includes a controller 1821, a memory 1822, a network interface 1823, and a wireless communication interface 1825.

The controller 1821 may be, for example, a CPU or a DSP and operate various functions of higher layers of the base station equipment 1820. For example, the controller 1821 generates a data packet based on data in a signal processed by the wireless communication interface 1825, and transmits the generated packet via the network interface 1823. The controller 1821 may bundle data from multiple baseband processors to generate a bundled packet and transmit the generated bundled packet. The controller 1821 may have logic functions for performing the following control: wireless resource control, radio carrying control, mobility management, admission control and schedule. The control may be performed in corporation with a nearby eNB or core network node. The memory 1822 includes an RAM and an ROM, and stores a program executed by the controller 1821 and various types of control data (such as a terminal list, transmission power data and scheduling data).

The network interface 1823 is configured to connect the base station equipment 1820 to a communication interface of the core network 1824. The controller 1821 may communicate with a core network node or another eNB via the network interface 1823. In this case, the eNB 1800 and the core network node or another eNB may be connected to each other via a logic interface (such as an S1 interface and an X2 interface). The network interface 1823 may be a wired communication interface or a wireless communication interface for a wireless backhaul line. If the network interface 1823 is a wireless communication interface, the network interface 1823 may use a higher frequency band for radio communication as compared with the frequency band used by the wireless communication interface 1825.

The wireless communication interface 1825 supports any cellular communication scheme (such as Long Term Evolution (LTE) and LTE-Advanced), and provides wireless connection to a terminal located in a cell of the eNB 1800 via the antenna 1810. The wireless communication interface 1825 may generally include a base band (BB) processor 1826 and an RF circuit 1827. The BB processor 1826 may perform, for example, encoding/decoding, modulating/demodulating, and multiplexing/de-multiplexing, and perform various types of signal processing of layers (such as L1, medium access control (MAC), radio link control (RLC), and packet data convergence protocol (PDCP)). Instead of the controller 1821, the BB processor 1826 may have a part or all of the above-mentioned logic functions. The BB processor 1826 may be a memory storing communication control programs, or a module including a processor which is configured to execute the programs and a related circuit. Update of the programs may change the function of the BB processor 1826. The module may be a card or a blade inserted into a slot of the base station equipment 1820. Alternatively, the module may be a chip installed on the card or the blade. Meanwhile, the RF circuit 1827 may include for example a mixer, a filter or an amplifier, and transmits and receives a radio signal via the antenna 1810.

The wireless communication interface 1825 may include multiple BB processors 1826, as illustrated in Figure 17. For example, the multiple BB processors 1826 may be compatible with multiple frequency bands used by the eNB 1800. As shown in Figure 17, the wireless communication interface 1825 may include multiple RF circuits 1827. For example, the multiple RF circuits 1827 may be compatible with multiple antenna elements. Although Figure 17 shows the example in which the wireless communication interface 1825 includes the multiple BB processors 1826 and the multiple RF circuits 1827, the wireless communication interface 1825 may also include a single BB processor 1826 or a single RF circuit 1827.

In the eNB 1800 shown in Figure 17, functions of the communication units in the electronic devices 300, 600, and 1100 described above with reference to Figure 3, Figure 6, and Figure 11 may be implemented through the wireless communication interface 1825 and optional the antenna 1810. The functions of the estimation units and selection units in the electronic devices 300, 600, and 1100, the determination units in the electronic devices 600 and 1100, and the configuration unit in the electronic device 1100 can be implemented by the controller 1821. For example, the controller 1821 may implement the functions of the estimation unit, the selection unit, the determination unit, and/or the configuration unit by executing instructions stored in the memory 1822.

(Second application example)

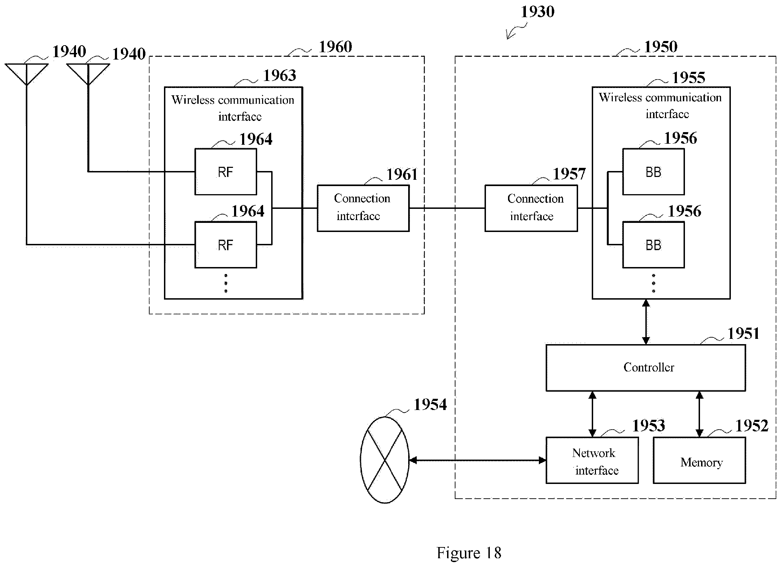

Figure 18 is a block diagram showing a second example of a schematic configuration of an eNB to which the technology of the present disclosure can be applied. An eNB 1930 includes one or more antennas 1940, a base station equipment 1950 and an RRH 1960. The RRH 1960 and each antenna 1940 may be connected to each other via an RF cable. The base station equipment 1950 and the RRH 1960 may be connected to each other via a high speed line such as an optical fiber cable.

Each of the antennas 1940 includes a single or multiple antenna elements (such as multiple antenna elements included in an MIMO antenna), and is used for the RRH 1960 to transmit and receive radio signals. As shown in Figure 18, the eNB 1930 may include multiple antennas 1940. For example, the multiple antennas 1940 may be compatible with multiple frequency bands used by the eNB 1930. Although Figure 18 illustrates an example in which the eNB 1930 includes multiple antennas 1940, the eNB 1930 may also include a single antenna 1940.

The base station equipment 1950 includes a controller 1951, a memory 1952, a network interface 1953, a wireless communication interface 1955, and a connection interface 1957. The controller 1951, the memory 1952, and the network interface 1953 are the same as the controller 1821, the memory 1822, and the network interface 1823 described with reference to Figure 17.

The wireless communication interface 1955 supports any cellular communication solution (such as LTE and LTE-advanced), and provides wireless communication with a terminal located in a sector corresponding to the RRH 1960 via the RRH 1960 and the antenna 1940. The wireless communication interface 1955 may typically include a BB processor 1956 for example. The BB processor 1956 is the same as the BB processor 1826 described with reference to Figure 17, except that the BB processor 1956 is connected to the RF circuitry 1964 of the RRH 1960 via the connection interface 1957. As show in Figure 18, the wireless communication interface 1955 may include multiple BB processors 1956. For example, the multiple BB processors 1956 may be compatible with the multiple frequency bands used by the eNB 1930. Although Figure 18 shows an example in which the wireless communication interface 1955 includes multiple BB processors 1956, the wireless communication interface 1955 may include a single BB processor 1956.

The connection interface 1957 is an interface for connecting the base station equipment 1950 (wireless communication interface 1955) to the RRH 1960. The connection interface 1957 may also be a communication module for communication in the above-described high-speed line via which the base station equipment 1950 (wireless communication interface 1955) is connected to the RRH 1960.

The RRH 1960 includes a connection interface 1961 and a wireless communication interface 1963.

The connection interface 1961 is an interface for connecting the RRH 1960 (the wireless communication interface 1963) to the base station equipment 1950. The connection interface 1961 may also be a communication module for the communication in the above high-speed line.

The wireless communication interface 1963 transmits and receives a wireless signal via the antenna 1940. The wireless communication interface 1963 may typically include, for example, the RF circuit 1964. The RF circuit 1964 may include for example frequency mixer, a filter and an amplifier, and transmits and receives a wireless signal via the antenna 1940. The wireless communication interface 1963 may include multiple RF circuits 1964, as illustrated in Figure 18. For example, the multiple RF circuits 1964 may support multiple antenna elements. Although Figure 18 shows an example in which the wireless communication interface 1963 includes the multiple RF circuits 1964, the wireless communication interface 1963 may also include a single RF circuit 1964.

In the eNB 1930 shown in Figure 18, the communication units in the electronic devices 300, 600, and 1100 described above with reference to Figure 3, Figure 6, and Figure 11 may be implemented, for example, through a wireless communication interface 1963 and an optional antenna 1940. The functions of the estimation unit and the selection unit in the electronic devices 300, 600, and 1100, the determination units in the electronic devices 600 and 1100, and the configuration unit in the electronic device 1100 can be implemented by the controller 1951. For example, the controller 1951 may implement the functions of the estimation unit, the selection unit, the determination unit, and/or the configuration unit by executing instructions stored in the memory 1952.

[Application example on user equipment]

(First application example)

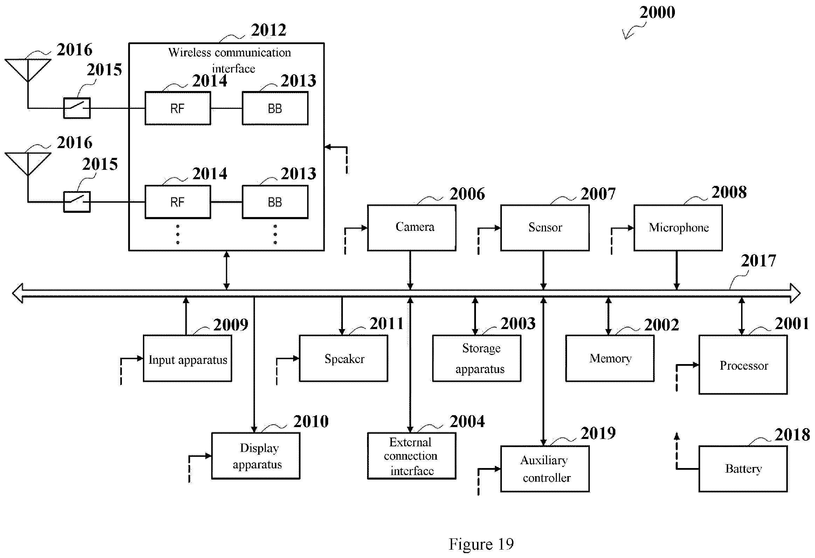

Figure 19 is a block diagram illustrating an example of exemplary configuration of a smartphone 2000 to which the technology of the present disclosure can be applied. The smartphone 2000 includes a processor 2001, a memory 2002, a storage apparatus 2003, an external connection interface 2004, a camera 2006, a sensor 2007, a microphone 2008, an input apparatus 2009, a display apparatus 2010, a speaker 2011, a wireless communication interface 2012, one or more antenna switches 2015, one or more antennas 2016, a bus 2017, a battery 2018, and an auxiliary controller 2019.

The processor 2001 may be, for example, a CPU or a system on chip (SoC), and control functions of an application layer and additional layer of the smartphone 2000. The memory 2002 includes RAM and ROM, and stores a program that is executed by the processor 2001, and data. The storage apparatus 2003 may include a storage medium such as a semiconductor memory and a hard disk. The external connection interface 2004 is an interface configured to connect an external apparatus (such as a memory card and a universal serial bus (USB) apparatus) to the smart phone 2000.

The camera 2006 includes an image sensor (such as a Charge Coupled Device (CCD) and a Complementary Metal Oxide Semiconductor (CMOS)) and generates a captured image. The sensor 2007 may include a group of sensors such as a measurement sensor, a gyro sensor, a geomagnetic sensor, and an acceleration sensor. The microphone 2008 converts sounds that are inputted to the smart phone 2000 into audio signals. The input apparatus 2009 includes, for example, a touch sensor configured to detect touch onto a screen of the display apparatus 2010, a keypad, a keyboard, a button, or a switch, and receive an operation or information inputted from a user. The display apparatus 2010 includes a screen (such as a liquid crystal display (LCD) and an organic light-emitting diode (OLED) display), and displays an output image of the smartphone 2000. The speaker 2011 converts audio signals that are outputted from the smart phone 2000 to sounds.

The wireless communication interface 2012 supports any cellular communication scheme (such as LTE and LTE-advanced), and performs wireless communication. The wireless communication interface 2012 may generally include for example a BB processor 2013 and an RF circuit 2014. The BB processor 2013 may perform encoding/decoding, modulating/demodulating and multiplexing/de-multiplexing for example, and perform various types of signal processing for wireless communication. Meanwhile, the RF circuit 2014 may include for example a mixer, a filter and an amplifier, and transmit and receive a wireless signal via the antenna 2016. The wireless communication interface 2012 may be a chip module having the BB processor 2013 and the RF circuit 2014 integrated thereon. As shown in Figure 19, the wireless communication interface 2012 may include multiple BB processors 2013 and multiple RF circuits 2014. Although Figure 19 illustrates the example in which the wireless communication interface 2012 includes the multiple BB processors 2013 and the multiple RF circuits 2014, the wireless communication interface 2012 may also include a single BB processor 2013 or a single RF circuit 2014.

Furthermore, in addition to a cellular communication scheme, the wireless communication interface 2012 may support another type of wireless communication scheme such as a short-distance wireless communication scheme, a near field communication scheme, and a wireless local area network (LAN) scheme. In this case, the wireless communication interface 2012 may include the BB processor 2013 and the RF circuit 2014 for each wireless communication scheme.

Each of the antenna switches 2015 switches connection destinations of the antennas 916 among multiple circuits (such as circuits for different wireless communication schemes) included in the wireless communication interface 2012.

Each of the antennas 2016 includes a single or multiple antenna elements (such as multiple antenna elements included in an MIMO antenna), and is used for the wireless communication interface 2012 to transmit and receive radio signals. The smartphone 2000 may include the multiple antennas 2016, as illustrated in Figure 19. Although Figure 19 illustrates the example in which the smartphone 2000 includes the multiple antennas 2016, the smartphone 2000 may also include a single antenna 2016.

In addition, the smartphone 2000 may include an antenna 2016 for each wireless communication scheme. In this case, the antenna switch 2015 may be omitted from the configuration of the smartphone 2000.

The bus 2017 connects the processor 2001, the memory 2002, the storage apparatus 2003, the external connection interface 2004, the camera 2006, the sensor 2007, the microphone 2008, the input apparatus 2009, the display apparatus 2010, the speaker 2011, the wireless communication interface 2012, and the auxiliary controller 2019 to each other. The battery 2018 supplies power to blocks of the smart phone 2000 shown in Figure 19 via feeder lines, which are partially shown as dashed lines in the figure. The auxiliary controller 2019 operates a minimum necessary function of the smart phone 2000, for example, in a sleep mode.

In the smart phone 2000 shown in Figure 19, the communication units in the electronic devices 300 and 600 described above with reference to Figures 3 and 6 may be implemented through wireless communication interface 2012 and optional antenna 2016. The functions of the estimation unit and the selection unit in the electronic device 300 and 600 and the determination unit in the electronic device 600 may be implemented by the processor 2001 or the auxiliary controller 2019. For example, the processor 2001 or the auxiliary controller 2019 may implement the functions of the estimation unit, the selection unit, and/or the determination unit by executing instructions stored in the memory 2002 or the storage apparatus 2003.

(Second application example)

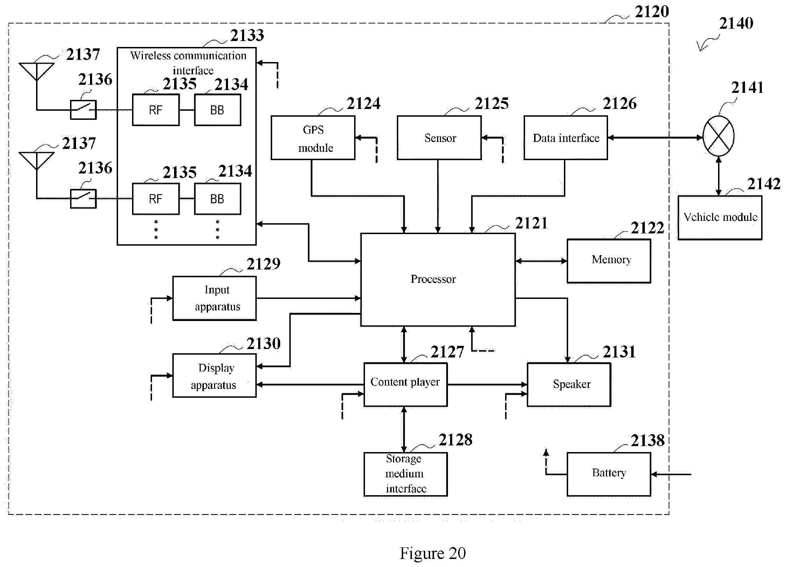

Figure 20 is a block diagram showing an example of a schematic configuration of a car navigation device 2120 to which the technology according to the present disclosure can be applied. The car navigation device 2120 includes a processor 2121, a memory 2122, a global positioning system (GPS) module 2124, a sensor 2125, a data interface 2126, a content player 2127, a storage medium interface 2128, an input apparatus 2129, a display apparatus 2130, a speaker 2131, a wireless communication interface 2133, one or more antenna switches 2136, one or more antennas 2137, and a battery 2138

The processor 2121 may be, for example, a CPU or a SoC, and control a navigation function and additional function of the vehicle navigation device 2120. The memory 2122 includes RAM and ROM, and stores a program that is executed by the processor 2121, and data.

The GPS module 2124 measures a position (such as latitude, longitude, and altitude) of the car navigation device 2120 by using GPS signals received from a GPS satellite. The sensor 2125 may include a group of sensors such as a gyroscope sensor, a geomagnetic sensor and an air pressure sensor. The data interface 2126 is connected to, for example, an in-vehicle network 2141 via a terminal that is not shown, and acquires data generated by the vehicle (such as vehicle speed data).

The content player 2127 reproduces content stored in a storage medium (such as a CD and a DVD) inserted into the storage medium interface 2128. The input apparatus 2129 includes, for example, a touch sensor configured to detect touch on a screen of the display apparatus 2130, a button, or a switch, and receives an operation or information inputted by a user. The display apparatus 2130 includes a screen such as a LCD or an OLED display, and displays an image of the navigation function or content that is reproduced. The speaker 2131 outputs sounds of the navigation function or the content that is reproduced.

The wireless communication interface 2133 supports any cellular communication scheme (such as LTE and LTE-advanced) and performs wireless communication. The wireless communication interface 2133 may typically include, for example, a BB processor 2134 and an RF circuit 2135. The BB processor 2134 may perform, for example, encoding/decoding, modulating/demodulating, and multiplexing/demultiplexing, and performs various types of signal processing for wireless communication. Meanwhile, the RF circuit 2135 may include for example a mixer, a filter and an amplifier, and transmit and receive a wireless signal via the antenna 2137. The wireless communication interface 2133 may be a chip module having the BB processor 2134 and the RF circuit 2135 integrated thereon. The wireless communication interface 2133 may include multiple BB processors 2134 and multiple RF circuits 2135, as shown in Figure 20. Although Figure 20 shows an example in which the wireless communication interface 2133 includes multiple BB processors 2134 and multiple RF circuits 2135, the wireless communication interface 2133 may also include a single BB processor 2134 and a single RF circuit 2135.

Furthermore, in addition to a cellular communication scheme, the wireless communication interface 2133 may support another type of wireless communication scheme such as a short-distance wireless communication scheme, a near field communication scheme, and a wireless LAN scheme. In this case, the wireless communication interface 2133 may include a BB processor 2134 and an RF circuit 2135 for each wireless communication scheme.

Each of the antenna switches 2136 switches connection destinations of the antennas 2137 among multiple circuits (such as circuits for different wireless communication schemes) included in the wireless communication interface 2133.

Each of the antennas 2137 includes one or more antenna elements (such as multiple antenna elements included in a MIMO antenna) and is used by the wireless communication interface 2133 to transmit and receive a wireless signal. As shown in Figure 20, the car navigation device 2120 may include multiple antennas 2137. Although Figure 20 illustrates an example in which the vehicle navigation device 2120 includes multiple antennas 2137, the car navigation device 2120 may also include a single antenna 2137.

In addition, the car navigation device 2120 may include an antenna 2137 for each wireless communication scheme. In this case, the antenna switches 2136 may be omitted from the configuration of the car navigation device 2120.

The battery 2138 supplies power to the blocks of the car navigation device 2120 shown in Figure 20 via a feeder line, which is partially shown with a dash line in the figure. The battery 2138 accumulates power provided by the vehicle.

In the car navigation device 2120 shown in Figure 20, the communication units in the electronic devices 300 and 600 described above with reference to Figure 3 and Figure 6 may be implemented through the wireless communication interface 2133 and optional antenna 2137. The functions of the estimation unit and the selection unit in the electronic device 300 and 600 and the determination unit in the electronic device 600 may be implemented by the processor 2121. For example, the processor 2121 may implement the functions of the estimation unit, the selection unit, and/or the determination unit by executing instructions stored in the memory 2122.

The technology of the present disclosure may also be implemented as an in-vehicle system (or a vehicle) 2140 including one or more of the automobile navigation device 2120, a vehicle network 2141 and a vehicle module 2142. The vehicle module 2142 generates vehicle data (such as vehicle speed, engine speed, and trouble information), and outputs the generated data to the in-vehicle network 2141.

The preferred embodiments of the present disclosure have been described above with reference to the accompanying drawings, but the present disclosure is of course not limited to the above examples. A person skilled in the art may find various alterations and modifications within the scope of the appended claims, and it should be understood that they will naturally come under the technical scope of the present disclosure.

For example, the units shown in dotted line boxes in the functional block diagrams shown in the accompanying drawings all indicate that the functional units are optional in the corresponding device, and respective optional functional units can be combined in an appropriate manner to realize the desired function.

For example, a plurality of functions included in one unit in the above embodiments may be realized by separate devices. Alternatively, a plurality of functions implemented by a plurality of units in the above embodiments may be respectively implemented by separate devices. In addition, one of the above functions may be realized by a plurality of units. Needless to say, such a configuration is included in the technical scope of the present disclosure.

In this specification, the steps described in the flowcharts include not only processing performed in time series in the stated order but also processing performed in parallel or individually and not necessarily in time series. Furthermore, even in the steps of time-series processing, needless to say, the order can be appropriately changed.

Although the embodiments of the present disclosure have been described in detail in conjunction with the accompanying drawings, it should be understood that the above-described embodiments are only used to illustrate the present disclosure, and are not intended to limit the present disclosure. Various modifications and changes can be made to the above-described embodiments by those skilled in the art without departing from the spirit and scope of the present disclosure. Therefore, the scope of the present disclosure is limited only by the appended claims and their equivalents.

## Claims

1. An electronic device comprising:
   processing circuitry configured to:

   estimate a prediction probability that each candidate beam is an optimal beam based on results of previous beam tracking with respect to another device in communication with the electronic device using the candidate beams; and
   select, based on the estimated prediction probability, a measurement beam for the next beam tracking among the candidate beams.

2. The electronic device of claim 1, wherein the results of beam tracking include time series data of signal qualities corresponding to the candidate beams obtained by beam tracking.

3. The electronic device of claim 2, wherein the processing circuitry is further configured to determine the prediction probability of the candidate beam using a pre-acquired prediction model that is acquired by machine learning using training data of the results of beam tracking.

4. The electronic device of claim 1, wherein the processing circuitry is further configured to:
   select the measurement beam by selecting, among the candidate beams, a minimum number of candidate beams whose total prediction probability satisfies a predetermined condition.

5. The electronic device of claim 1, wherein the processing circuitry is further configured to:
   select the measurement beam by selecting, among a plurality of candidate beam sets, the smallest candidate beam set whose total prediction probability of the included candidate beams satisfies a predetermined condition.

6. The electronic device according to claim 4 or 5, wherein the predetermined condition includes that the total prediction probability is greater than a predetermined threshold.

7. The electronic device according to claim 5, wherein each candidate beam set includes one or more adjacent beam sets, and each adjacent beam set is centered on an optimal prediction beam with the highest prediction probability among all candidate beams and includes candidate beams with a predetermined beam distance from the optimal prediction beam, wherein the Lth candidate beam set includes an adjacent beam set whose beam distance is the minimum value and (L-1) adjacent beam sets whose beam distances increase sequentially from the minimum value, L being a natural number greater than or equal to 1.

8. The electronic device of claim 7, wherein the distance between the candidate beam and the optimal prediction beam is determined based on difference between a direction of the candidate beam and a direction of the optimal prediction beam.

9. The electronic device of claim 1, wherein the processing circuitry is further configured to:

obtain a signal quality corresponding to each measurement beam in the next beam tracking, and determine the beam to be used in data transmission among the measurement beams according to the obtained signal qualities.

10. The electronic device of claim 1, wherein the processing circuitry is further configured to:
select, before the first beam tracking is performed with respect to the other device, a measurement beam for the first beam tracking among the candidate beams based on a result of beam scanning with respect to the other device using the candidate beams.

11. The electronic device according to claim 1, wherein the candidate beam is a transmission beam of a downlink reference signal, and the electronic device is a network side device.

12. The electronic device of claim 11, wherein the processing circuitry is further configured to:
provide configuration information of a resource set of the downlink reference signal in advance for the other device, wherein each downlink reference signal in the resource set can be sent separately.

13. The electronic device of claim 12, wherein the processing circuitry is further configured to:
send, when a number of downlink reference signals selected for the next beam tracking is different from a number of downlink reference signals for the previous beam tracking, an indication about the number of downlink reference signals selected for the next beam tracking to the other device.

14. The electronic device of claim 12, wherein the processing circuitry is further configured to:
send, when a different downlink reference signal is selected for the next beam tracking than that for the previous beam tracking, an indication about the downlink reference signal selected for the next beam tracking to the other device.

15. The electronic device according to claim 1, wherein the candidate beam is a reception beam for a downlink reference signal, and the electronic device is a terminal device.

16. The electronic device of claim 15, wherein the processing circuitry is further configured to:
obtain configuration information of a resource set of the downlink reference signal in advance from a network side device, wherein each downlink reference signal in the resource set can be sent separately.

17. The electronic device of claim 16, wherein the processing circuitry is further configured to:
send, when a number of reception beams selected for the next beam tracking is different from that for the previous beam tracking, a request for the downlink reference signal for the next beam tracking to the network side device.

18. The electronic device of claim 17, wherein the processing circuitry is further configured to:
receive, from the network side device, an indication about the downlink reference signal to be used for the next beam tracking that is sent in response to the request.

19. A method for wireless communication, comprising:

estimating a prediction probability that each candidate beam is an optimal beam based on the results of previous beam tracking using the candidate beams with respect to another device in communication with the electronic device; and
selecting, based on the estimated prediction probability, a measurement beam for the next beam tracking among the candidate beams.

20. A non-transitory computer-readable storage medium storing executable instructions that, when executed by a processor, cause the processor to perform the method for wireless communication of claim 19.

Figure 1

Figure 2

300

Estimation unit **310**

Selection unit **320**

Communication unit **330**

Figure 3

Figure 4

Figure 5

Figure 6

Output at instant t

Cell state at instant (t-1)

Cell state at instant t

tanh

Output at instant (t-1)

σ   σ   tanh   σ

Output at instant t

Input at instant t

Figure 7

Result of the t-th beam tracking

PM

CNN

LSTM

Fully connected layer

Softmax layer

Predicted probability that candidate beam is
optimal beam for the (t+1)-th beam tracking

Figure 8

Figure 9

Figure 10

**1100**

| Estimation unit **1110** |
| :---: |

| Selection unit **1120** |
| :---: |

| Communication unit **1130** |
| :---: |

| Determination unit **1140** |
| :---: |

| Configuration unit **1150** |
| :---: |

Figure 11

BS                                                                          UE

| S1. Configure flexible CSI-RS resource set |

| S2. Configure probability threshold and default number of measurement beams /default measurement beam set number, and determine measurement beams for initial beam tracking |

S3. Beam tracking notification

S4. Periodically send selected CSI-RS

S5. RSRP of each CSI-RS

| S6. Determine beam to be used, and measurement beams for next beam tracking |

S7. New beam tracking notification, if number of measurement beams changes

Figure 12

BS                                              UE

S1. Configure flexible CSI-RS resource set

S2. Configure probability threshold and default
number of measurement beams /default measurement
beam set number, and determine measurement beams
for initial beam tracking

←————————— S3. Beam tracking request ——————————

— —— —  S4. Beam tracking resource ___ ————→
                    notification

————— S5. Periodically send required CSI-RS ————→

S6. Determine beam to be used, and measurement
beams for next beam tracking

S7. New beam tracking request, if number
of measurement beams changes
←————————————————————————

— —— —   S8.  Beam tracking        —— ——→
              resource notification

Figure 13

Figure 14

Figure 15

```
           ╭──────────────╮
           │    start     │
           ╰──────┬───────╯
                  │
                  ▼
 ┌──────────────────────────────────────┐
 │  Estimating a predicted probability   │        **S1601**
 │  that each candidate beam is an        │
 │  optimal beam based on a               │
 │  previous beam tracking result with    │
 │  respect to another device in          │
 │  communication with electronic         │
 │  device using the candidate beams      │
 └────────────────┬─────────────────────┘
                  │
                  ▼
 ┌──────────────────────────────────────┐
 │  Select, based on the estimated        │        **S1602**
 │  prediction probability, measurement   │
 │  beams for next beam tracking among    │
 │  the candidate beams                   │
 └────────────────┬─────────────────────┘
                  │
                  ▼
           ╭──────────────╮
           │     end      │
           ╰──────────────╯
```

Figure 16

**1800**

**1810** **1810** **1820**

**1825**

Wireless communication interface

**1827** **1826**

| RF | BB |

**1827** **1826**

| RF | BB |

⋮ ⋮

**1821**

Controller

**1824**

**1823** **1822**

| Network interface | Memory |

Figure 17

Figure 18

EP 4 465 548 A1

2000

2012
Wireless communication
interface

2016
2015
2014
RF
2013
BB

2016
2015
2014
RF
2013
BB

2006
Camera

2007
Sensor

2008
Microphone

2017

2009
Input apparatus

2011
Speaker

2003
Storage
apparatus

2002
Memory

2001
Processor

2010
Display
apparatus

2004
External
connection
interface

2019
Auxiliary
controller

2018
Battery

Figure 19

Figure 20

## INTERNATIONAL SEARCH REPORT

| International application No. |
|---|
| **PCT/CN2023/070959** |

| | |
|---|---|
| **A.** | **CLASSIFICATION OF SUBJECT MATTER** |
| | H04B 7/06(2006.01)i |

According to International Patent Classification (IPC) or to both national classification and IPC

| | |
|---|---|
| **B.** | **FIELDS SEARCHED** |

Minimum documentation searched (classification system followed by classification symbols)
IPC:H04B

Documentation searched other than minimum documentation to the extent that such documents are included in the fields searched

Electronic data base consulted during the international search (name of data base and, where practicable, search terms used)
CNKI, CNPAT, WPI, EPODOC: 波束, 上行, 下行, 预测, 概率, 质量, 角, 候选, 跟踪, 时间, 序列, beam, uplink, downlink, prediction, probability, QoS, angle, candidate, tracking, time, sequence

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2020227859 A1 (TELEFONAKTIEBOLAGET LM ERICSSON (PUBL) et al.) 19 November 2020 (2020-11-19) description, page 17, line 18-pages 49, line 11 | 1-20 |
| X | WO 2020244748 A1 (TELEFONAKTIEBOLAGET LM ERICSSON (PUBL)) 10 December 2020 (2020-12-10) description, page 7, line 25-page 18, line 8 | 1-20 |
| X | WO 2020244747 A1 (TELEFONAKTIEBOLAGET LM ERICSSON (PUBL)) 10 December 2020 (2020-12-10) description, page 8, line 27-page 21, line 5 | 1-20 |
| A | US 2019007122 A1 (TELEFONAKTIEBOLAGET LM ERICSSON (PUBL)) 03 January 2019 (2019-01-03) entire document | 1-20 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 February 2023** | **21 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/070959**

| Patent document cited in search report | | | Publication date (day/month/year) | Patent family member(s) | | | Publication date (day/month/year) |
|---|---|---|---|---|---|---|---|
| WO | 2020227859 | A1 | 19 November 2020 | US | 2022216905 | A1 | 07 July 2022 |
| | | | | EP | 3967090 | A1 | 16 March 2022 |
| | | | | CN | 113812192 | A | 17 December 2021 |
| WO | 2020244748 | A1 | 10 December 2020 | US | 2022231746 | A1 | 21 July 2022 |
| | | | | EP | 3981084 | A1 | 13 April 2022 |
| WO | 2020244747 | A1 | 10 December 2020 | EP | 3981083 | A1 | 13 April 2022 |
| | | | | US | 2022224398 | A1 | 14 July 2022 |
| | | | | IN | 202147055600 | A | 10 December 2021 |
| US | 2019007122 | A1 | 03 January 2019 | WO | 2019004887 | A1 | 03 January 2019 |
| | | | | EP | 3646477 | A1 | 06 May 2020 |
| | | | | IN | 201747041785 | A | 04 January 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210031216